# EUROPEAN PATENT SPECIFICATION

(11) **EP 3 771 685 B1**
(45) Date of publication and mention of the grant of the patent: **03.05.2023**
(21) Application number: 20189180.1
(22) Date of filing: 03.08.2020
(51) Int. Cl.: B66F 9/12, B60P 1/52

(54) **LOADING MODULE AND METHOD FOR TRANSPORT OF GOODS**
LADEMODUL UND VERFAHREN ZUM TRANSPORT VON GÜTERN
MODULE DE CHARGEMENT ET PROCÉDÉ POUR LE TRANSPORT DE MARCHANDISES

(30) Priority: 02.08.2019 NL 2023603
(43) Date of publication of application: 03.02.2021
(73) Proprietor: Meijer Holding B.V., 9079 NG Sint Jacobiparochie (NL)
(72) Inventor: MEIJER, Hendrik, 9079 NG Sint Jacobiparochie (NL)
(74) Representative: Arnold & Siedsma

(56) References cited:
- AU-A1- 2017 358 322
- US-A- 3 549 035
- US-A1- 2004 191 047
- US-A1- 2014 301 815
- US-A1- 2016 264 385

## Description

The invention relates to a loading module for transport of goods. Such a loading module can for instance be used in the loading of containers or trucks.

For loading of containers and loading spaces or cargo spaces of trucks or lorries use is usually made of goods on pallets which are moved into the loading space using forklift trucks or pallet trucks. In practice this results in a lot of manoeuvring with such vehicles and/or tools. This is usually labour-intensive and requires specific skills from users/operators. In addition, dangerous situations frequently occur in practice, which may result in damage to goods, vehicles and/or people.

Document US 3549035 discloses a lift truck with a fork that has an elongated flat surface wedge guide for slight longitudinal movement in each of the tines, and roller bearing arranged transversely of the wedge for sustaining a load as said roller, embedded for half of their diameter in the wedge, are moved under the load by the said movement of the wedge which may be by hydraulic or automatic means.

The present invention has for its object to provide a loading module whereby the above stated problems are obviated or at least reduced, and for instance a container loading space can be loaded in effective manner.

This object is achieved with the loading module for transport of goods according to claim 1.

Providing the frame of the loading module with a carrying surface enables goods to be placed on or above this carrying surface in effective manner. The goods can then be transported to the desired location. If desired, use can be made here of pallets and/so-called slip sheets. The loading module according to the invention is also highly suitable for transporting long items such as (foundation) piles and the like.

Providing a first row of roller elements enables the module to be displaced over a ground surface. The roller elements are for instance formed by barrels, cones, balls, wheels, belts and the like. Providing a row of roller elements achieves that the weight of the load is distributed over a relatively large number of roller elements and a relatively large surface area. This has the advantage that the point load on a ground surface is relatively limited compared to conventional systems. By further having the row of roller elements extend over a large part of the length of the loading module a stable position of the carrying surface during displacement of the loading module is further achieved. This is because holes, cracks, grooves have only a limited influence on several of the roller elements present in this first row, whereby the stability of the load on the carrying surface is maintained.

Providing a second row of roller elements, wherein the rotation shafts of these roller elements lie at a greater distance from the ground surface, i.e. in practice higher, than the rotation shafts of the first row of roller elements enables a load to be placed on the carrying surface, or removed therefrom and set down at the desired location, in effective manner. This is realized by making use of a pneumatic and/or hydraulic lifting element which is configured to switch between the first transport mode and the second pick-up or set-down mode.

In the transport mode the pneumatic and/or hydraulic lifting element ensures that the second row of roller elements is not in contact with the load on the carrying surface. This means that in this mode the roller elements do not protrude through openings in the carrying surface. The load therefore remains stable at the same position on the carrying surface, and the loading module according to the invention can be displaced to a desired location.

Passing the loading module according to the invention from the transport mode to the second pick-up or set-down mode using the pneumatic and/or hydraulic lifting element enables cargo to be set down in effective manner. This is achieved in that in this mode the roller elements of the second row of roller elements protrude at least partially through the openings in the carrying surface and are thereby in direct or indirect contact with the load positioned thereon. It is hereby possible to displace the load over the carrying surface. Because in this pick-up or set-down mode the roller elements of the second row are preferably in a rolling contact with the roller elements of the first row, it is achieved that when the loading module is displaced over the ground surface, the load remains at substantially the same position relative to this ground surface, while the loading module is displaced. This is because the roller elements of the first row move over the ground surface. Because the roller elements of the second row of roller elements are in rolling contact with the first roller elements, they will co-rotate in the other direction. The load will thereby remain at substantially the same position relative to the ground surface while the carrying surface is moved along under the load, as it were. This is particularly advantageous in picking up and/or setting down of cargo using a loading module according to the invention. An additional advantage is that the loading module can be applied without modifications having to be made to for instance the loading bay. It is thus for instance not necessary to arrange rails in a ground surface.

The roller elements are preferably manufactured from material with a high friction coefficient, such as polyurethane, rubber and the like. It will be apparent that application of other materials is also possible.

In a loading module according to the invention the lifting element is embodied as a pneumatic and/or hydraulic lifting element. A pneumatic lifting element can usually be embodied cost-effectively as compare to other lifting systems, and is additionally reliable. In addition, pneumatics are commonly available, for instance in the form of a compressed air system. In further addition such a pneumatic lifting system is robust in practice, and the pressure in the system is distributed substantially homogeneously. This for instance means that a uniform lifting or descending movement can be realized using the pneumatic lifting element. It has been found here that, in practice, an (operating) pressure in the range of 1-10 bar results in an effective embodiment for the pneumatic loading module, wherein a pressure in the range of 1.5-4 bar is preferably employed, and the pressure most preferably amounts to about 2 bar. Alternatively or additionally, the lifting element can be provided as a hydraulic element which is filled with a liquid. Such a liquid can be water, oil or another suitable liquid.

A further additional advantage of using a, currently preferred, pneumatic lifting element is that it is a relatively clean component compared to for instance a hydraulic element. This simplifies maintenance.

Using the loading module according to the invention it is achieved that a large part of the load, or even the whole load, can be positioned in a container and/or other loading space in one go. This reduces the number of movements having to be carried out during loading or unloading. It will be apparent that this greatly improves the effectiveness of the loading process, and thereby of the transport in general. The safety during loading is also improved. Damage to goods and/or persons is hereby avoided.

In addition, in a currently preferred embodiment it is possible to send the loading module according to the invention including cargo out for transport. Unloading of a container and/or truck is hereby also simplified. It will be apparent that such an option is particularly interesting in the case of regular goods flows, wherein there are preferably also return flows so that loading modules according to the invention can be utilized in efficient manner.

In a currently preferred embodiment according to the invention the pneumatic and/or hydraulic lifting element provides for movement of the carrying surface in a substantially vertical direction relative to the second row of roller elements. This enables a relatively simple system for the loading module according to the invention. In such an embodiment the module switches to the first transport mode when the pneumatic and/or hydraulic lifting element is activated and in such a preferred embodiment the carrying surface is lifted, such that the roller elements of the second row of roller elements no longer protrude through the openings in the carrier surface. In this mode the second row of roller elements remain substantially in contact with the roller elements of the first row of roller elements, however, without affecting the position of the load relative to the carrying surface. This has the advantage that the rotation shafts of all the roller elements can be fixedly mounted and that in this embodiment only the carrying surface varies in (height) position as a result of the pneumatic and/or hydraulic lifting element.

According to the invention, the pneumatic and/or hydraulic lifting element comprises a hose. By embodying the lifting element at least partially as a hose it can be incorporated in effective manner in the loading module according to the invention. The hose preferably extends here over substantially the whole length of the loading module. This makes it possible to realize a homogenous lifting movement and also a homogenous descending movement of the carrying surface relative to the roller elements. If desired, it is also possible according to the invention to provide more than one hose.

In a currently preferred embodiment the hose is a type of firehose of for instance a canvas plastic material with a diameter of between 30 and 110 mm, preferably about 30 to 52 mm, such that when the pneumatic and/or hydraulic lifting element is activated, the carrying surface is displaced in upward direction over a distance of about 2-3 cm. In a currently preferred embodiment the hose is about 2.5 cm high after activation thereof with for instance compressed air, and is about 70 mm wide and 5 mm high in non-activated state. It is the case here that different dimensions and/or a different number of hoses are possible, also depending on the specifications for the loading module.

At least one hose is preferably provided, which preferably extends in longitudinal direction of the loading module according to the invention. In alternative embodiments a plurality of hoses is used, these for instance lying parallel or following a different pattern. It is also possible to provide a type of cushioning element whereby a greater contact surface is obtained. It will be apparent that the choice of form and embodiment of the pneumatic and/or hydraulic lifting element is linked inter alia to the properties of the load for displacing and/or the specifications of the loading module according to the invention.

An additional advantage of using a pneumatic and/or hydraulic lifting element is that, as an additional effect, a damping/protective effect is obtained for the load on the carrying surface. Unevennesses in the ground surface will thus for instance have less of an effect on the load placed on the carrying surface. Damage to the load is hereby avoided as far as possible, and the risk of the load falling off the carrying surface is also reduced.

In a currently preferred embodiment the carrying surface is configured to move upward and/or downward in accordance with the (currently preferred pneumatic) lifting means.

During movement of the carrying surface use is for instance made of a guide or a plurality of guides to guide the carrying surface unequivocally in a substantially vertical direction during lifting and/or descending thereof.

In a further advantageous embodiment according to the invention the loading module further comprises a pneumatic coupling configured to couple a compressed air source to the pneumatic lifting element.

By providing a pneumatic coupling the pneumatic lifting element can be coupled to a source in effective manner. Such a source is for instance a (present) compressed air line, or another source, including a hand pump, foot pump or other pump system. In this way the pneumatic lifting element can be inflated in effective manner so as to thereby move the carrying surface in particular relative to the roller elements.

The invention further relates to a loading system comprising one or more loading modules in an embodiment according to the invention, and one or more (currently preferred pneumatic) front modules.

Such a loading system provides similar advantages and effects as described for the loading module. Such a front module is embodied substantially similarly to the loading module. The front module is preferably provided on the front side with a nose element. The front module is further preferably provided with a height decreasing toward the front side, such that the front module can be inserted under a load and/or can set down load more easily.

In the loading system the desired dimensioning can in particular be adapted to for instance a container size, such as a 20ft container, wherein two loading modules are for instance positioned one behind the other in longitudinal direction, with two or four tracks/rows adjacently of each other. It will be apparent that other configurations for the loading system according to the invention are likewise possible. For a 40ft container, use can thus for instance be made of four modules which are placed one behind the other in longitudinal direction, and use can be made of more than 3 tracks positioned adjacently of each other. In this way such a container can be loaded in a single run. Other loading spaces, such as those of trucks, can also be loaded in similar manner.

In an advantageous embodiment according to the invention the loading system comprises a number of spacers for connecting loading modules which are positioned adjacently of each other as seen in the usual direction of travel.

By providing spacers the individual mutually adjacent loading modules of individual so-called tracks can be placed at a desired distance and held there. A flexible and robust loading system is hereby obtained.

The spacers are preferably provided adjustably in longitudinal direction. It is hereby possible to realize a fine adjustment for the distance between adjacent modules of the loading system. It is hereby for instance possible to compensate for production tolerances. Such an adjustable spacer makes use of an adjusting mechanism, for instance by making use of screws or bolts. In a currently preferred embodiment it is possible to bridge a distance of up to 4 cm of clearance. In practice, it has been found that this provides sufficient clearance to enable a desired fine adjustment. The spacer is preferably likewise provided with a spring element, for instance incorporated into the means for making the length of the spacer adjustable. A less rigid/stiff construction for the loading system according to the invention is obtained by using the spring element. This is particularly advantageous in the case of a ground surface with some unevennesses.

In a further embodiment according to the invention the loading system comprises a support bar configured to hold the load in position when it is being set down.

It has been found in practice that in setting down a load, i.e. unloading, this load can begin to lean to one side to some extent while being set down. This creates a space/intermediate distance between adjacent pallets placed in a container or other loading space. This is generally undesirable. Making use of an additional support bar which is arranged directly behind the load on the loading system according to an embodiment of the invention achieves that the pallet is thereby pushed from the loading module(s) to sufficient extent and intermediate space between the pallets placed one behind the other remains limited. By preventing or at least reducing the creation of gaps between the individual pallets during unloading in the trailer/container a loading space can be loaded in effective manner.

As an alternative to said support bar, or in addition to said support bar, the load can, in addition to the drive via the double roller system, also be stopped additionally on the rear side by placing a type of bar/barrier, which is fixed to the ground, behind the load once the loading system is positioned in the loading space of for instance the trailer/container, and then reversing the unit, wherein the bar/barrier stops the pallets. It is also possible to have a weight on wheels travel along behind the load, and when the load is in the trailer/container, 'put the brake on' the weight so that it stops the load when the unit is pulled from under it. It is likewise possible to use a push chain with motor drive, mounted on the rear side of the loading system, to push on the load while the system is pulled rearward out of the trailer/container. The chain here pushes against the pallets in a substantially horizontal direction.

In a further advantageous embodiment according to the invention the loading system comprises a carrier plate configured to be arranged between the load and the carrying surface.

By providing a separate carrier plate the weight of the load is on the one hand distributed even better over the whole carrying surface of the loading system, and a good engagement of the roller elements of the second row of roller elements on the load is on the other hand provided. This results in a robust system with good operation. An additional advantage of using such a carrier plate is that the above discussed leaning to one side is prevented, also when the load is being set down. Cargo can hereby be placed closer together in a loading space.

In a further advantageous embodiment according to the invention the loading system further comprises an automatic loading system.

Providing an automatic loading system enables cargo to be arranged on the loading system according to the invention and then transported in the loading space in an even more effective manner. Such an automatic loading system for instance makes use of a conveyor belt which is incorporated in the ground surface.

The invention further relates to a method for transport of goods, the method comprising the steps of:
- providing a loading module and/or loading system in an embodiment according to the invention;
- picking up the goods;
- displacing the goods; and
- setting down goods.

Such a method provides similar effects and advantages as described for the loading module and/or loading system. It has particularly been found that such a method enables an efficient and safe transport.

Further advantages, features and details of the invention are elucidated on the basis of preferred embodiments thereof, wherein reference is made to the accompanying drawings, in which:
- Figure 1A shows a view of a loading system with loading modules according to the invention;
- Figure 1B shows a view of a loading system with loading modules and front modules;
- Figure 2 shows a side view of the loading system of figure 1B;
- Figure 3 shows a detail of the spacer of the loading system of figure 1B;
- Figure 4 shows a detail of the coupling between two modules, placed one behind the other, of the loading system in figures 1A and 1B;
- Figure 5A shows a view of a loading module of a loading system according to figures 1A and 1B;
- Figure 5B shows a side view of a loading module of figure 5A;
- Figure 5C shows a cross-section of the loading module of figure 5A;
- Figure 5D shows an exploded view of the loading module of figure 5A;
- Figures 6A-D show views of a (pneumatic) front module of the loading system of figures 1A and 1B; and
- Figures 7A and B show the operating principle of the rows with roller elements in the loading systems of figures 1A and 1B.

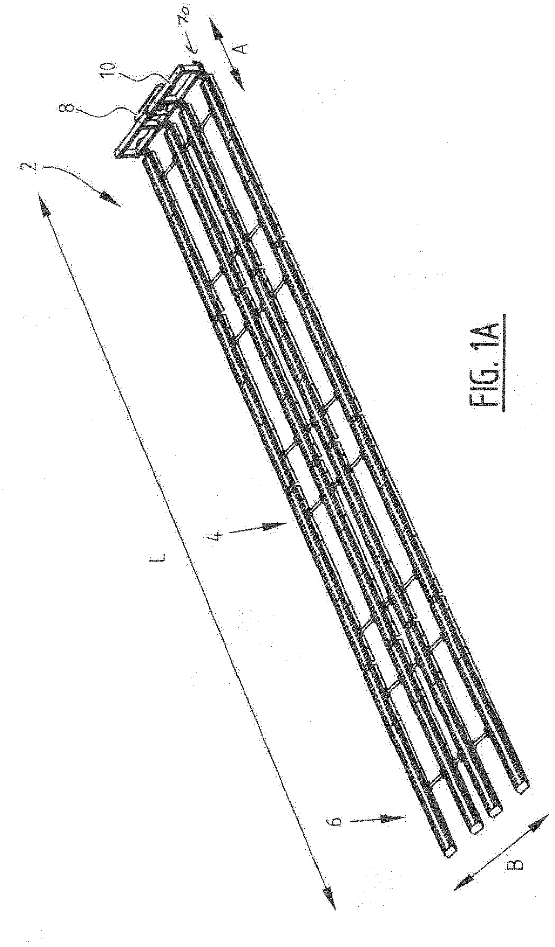

Loading system 2 (figure 1A) is composed of a number of loading modules 4, preferably in combination with (pneumatic) front modules 6. An engagement 8 is provided, whereby a forklift truck, AGV or other vehicle can transport loading system 2. If desired, it is also possible to provide a drive directly on loading system 2. Loading system 2 is further provided with push plate or push bar 10 which is optionally movable in direction A over loading system 2.

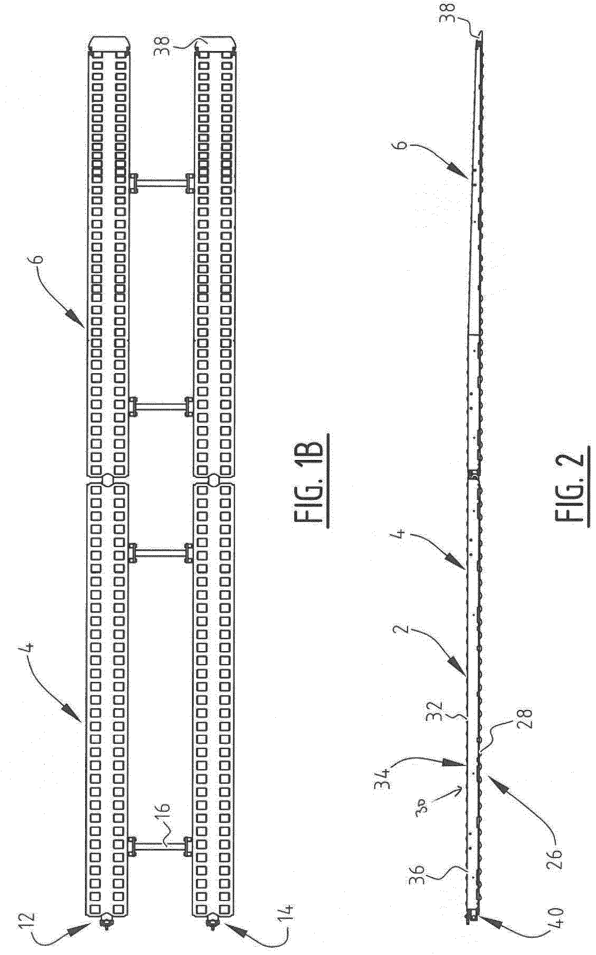

In the shown embodiment four tracks, which are mutually connected with spacers 16, are provided adjacently of each other. Loading system 2 extends in longitudinal direction over distance L and in width direction over distance B. Spacers 16 connect two adjacent tracks 12, 14 (figure 1B). In the shown embodiment spacer 16 is configured to hold tracks 12, 14 at a mutual distance, wherein the intermediate space for instance lies in the range of 300-750 mm, preferably in the range of 400-550 mm.

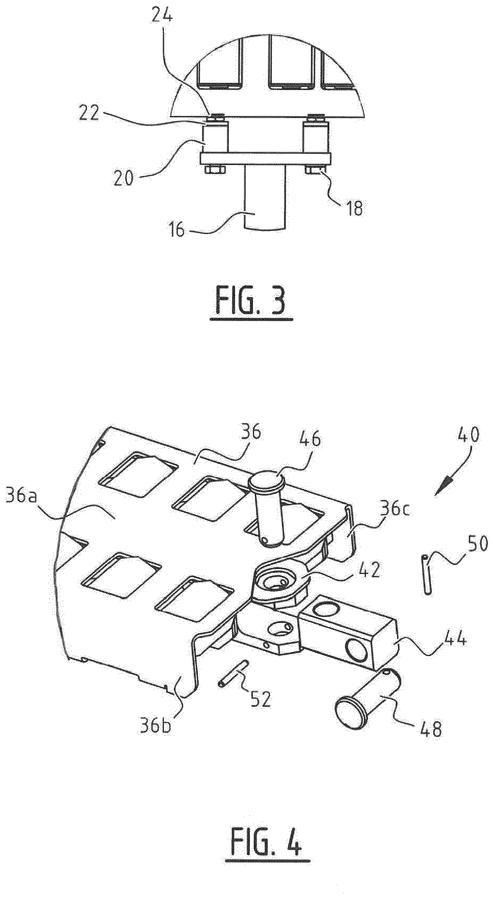

In the shown embodiment spacer 16 is connected via bolt construction 18 to loading module 4. In the shown embodiment use is preferably made here of spring element 20, washer 22 and contact elements 24 of module 4 (Figure 3).

First row 26 of roller elements 28 is in contact with a ground surface during use. Positioned wholly or partially thereabove is second row 30 of roller elements 32 (figure 2). In the pick-up or set-down mode roller elements 32 of second row 30 can protrude wholly or partially through opening 34 arranged in carrying surface 36. In the shown embodiment front module 6 is provided with a decreasing thickness as seen in the direction toward the front side of loading system 2, wherein nose element 38 is arranged on the front side. Modules 4, 6 are coupled to each other in longitudinal direction L of loading system 2 using coupling 40.

Coupling 40 (figure 4) is a type of pin-hole connection with opening 42, connecting block 44, pins 46, 48 and spring pins 50, 52. Carrying surface 36 is formed on the upper side by surface 36a and in the shown embodiment is provided on the sides with bent edges 36b, 36c.

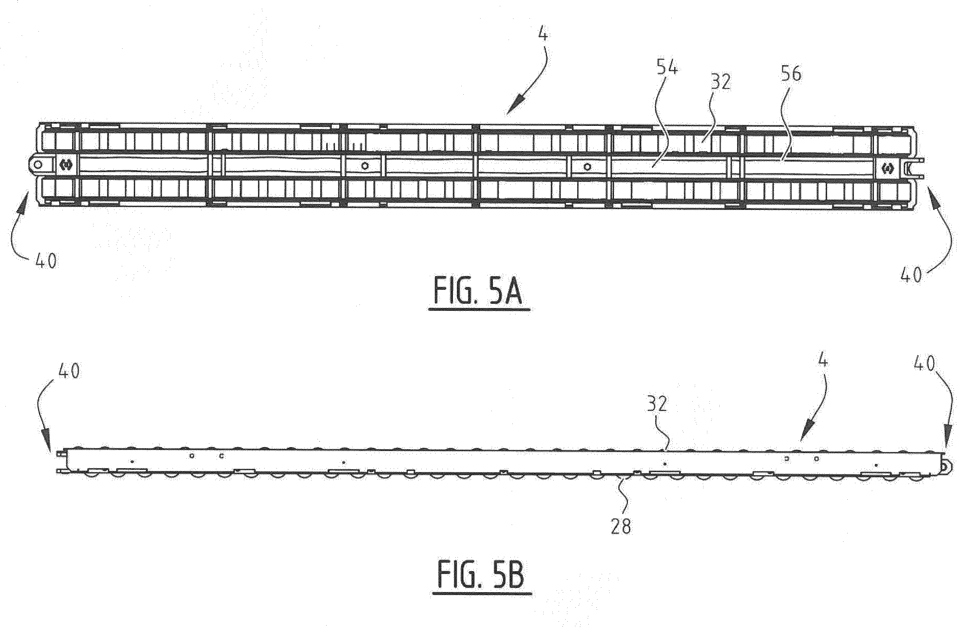

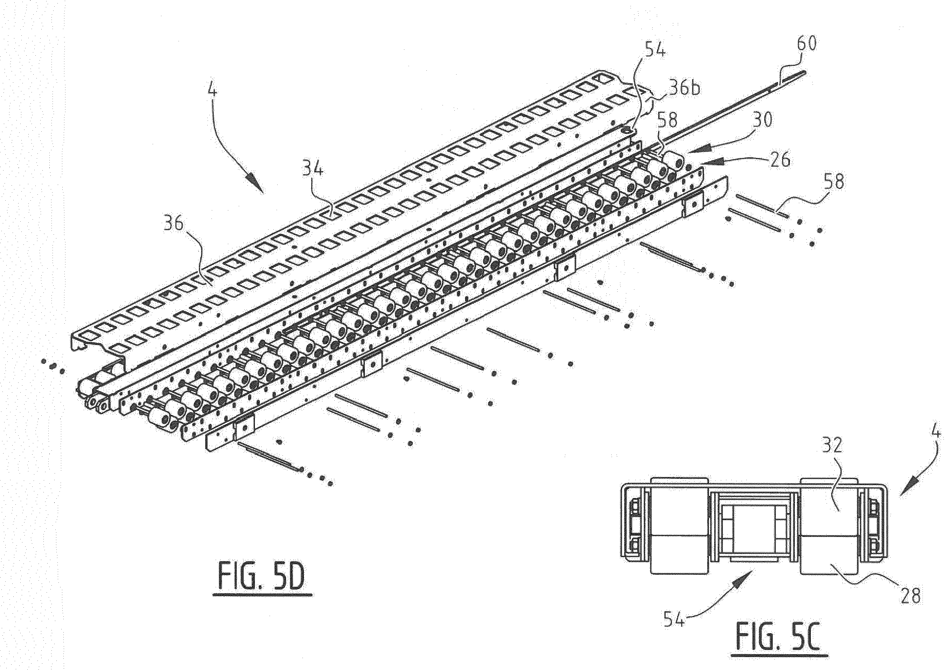

Loading module 4 (figures 5A-D) is provided with space 54 between the mutually adjacent rows of roller elements 32 of module 4, 6 in which a (currently preferred pneumatic) lifting element in the form of hose 56 can be placed. Roller elements 28, 32 are arranged in module 4 using rotation shaft 58. Further provided in the shown embodiment is closing plate 60 for mutual fixing of the components of module 4.

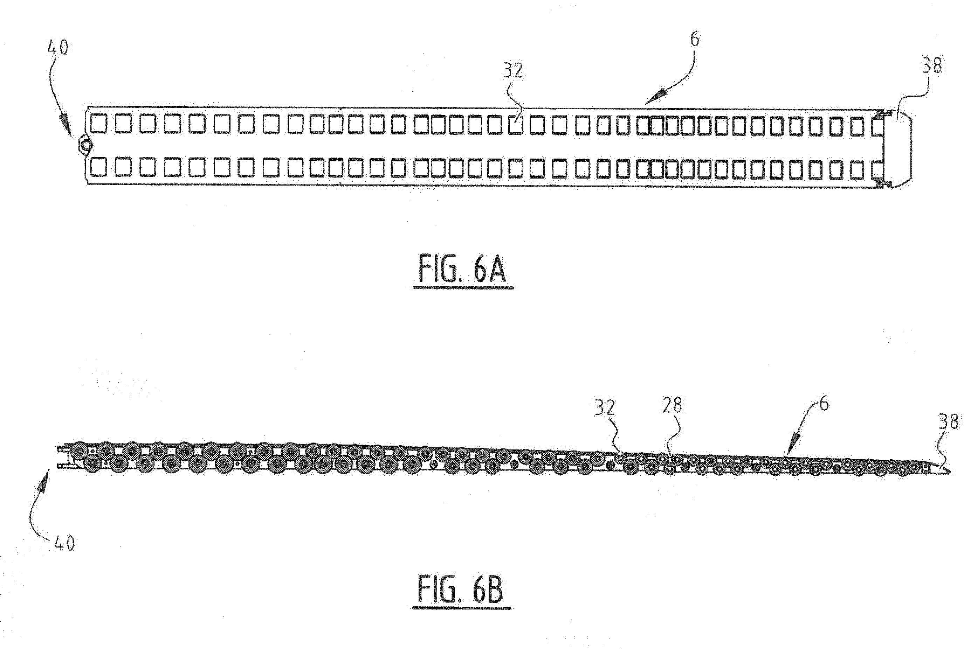

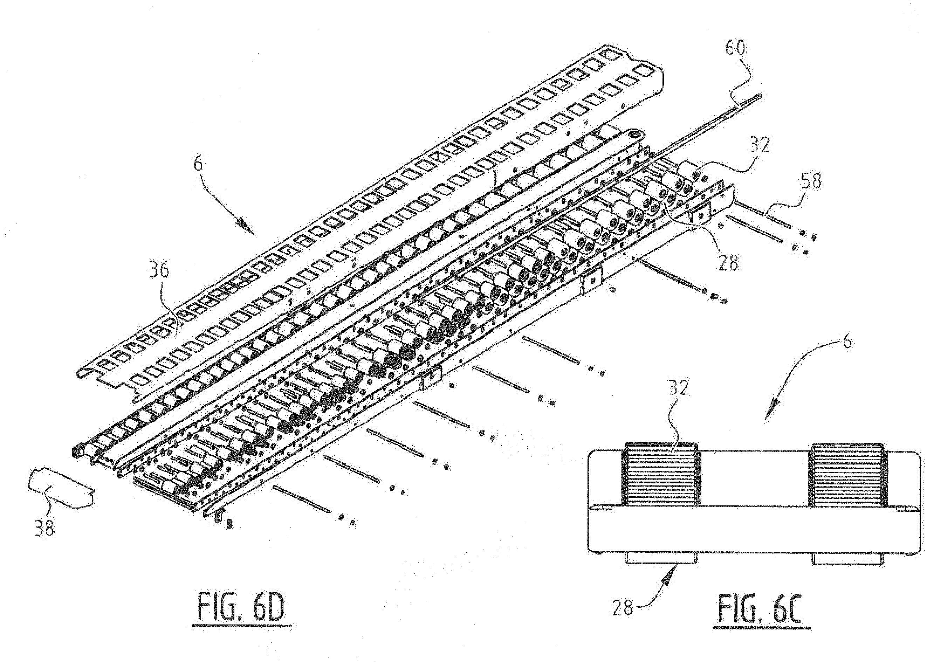

Front module 6 (figures 6A-D) is constructed in similar manner, wherein in the shown embodiment roller elements 28, 33 decrease in diameter in the direction of nose element 38 so as to thereby enable them to be inserted under the load more easily. This decrease in diameter of roller elements 28, 32 can be given a continuous progression, or in steps in order to limit the number of variations in diameters of roller elements.

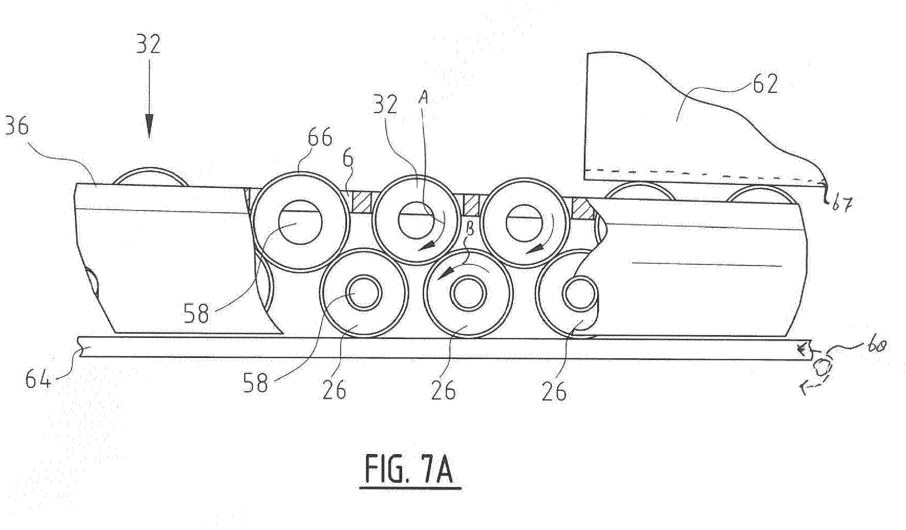

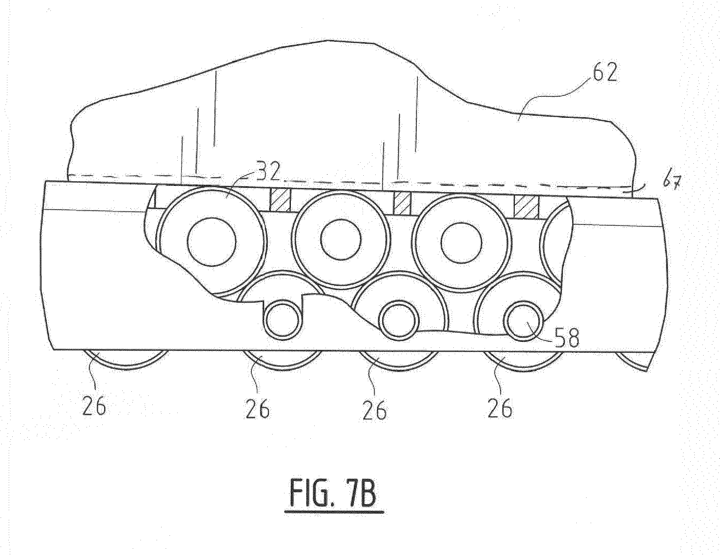

In the shown embodiment roller elements 28, 32 (Figures 7A-B) are provided in fixedly arranged manner and are in mutual contact with contact surfaces 66 in both the first transport mode and the second pick-up or set-down mode. First roller elements 28 move over ground surface 64 during displacement of loading system 2, while in the pick-up or set-down mode roller elements 32 of second row 30 are in contact with load 62 in that these roller elements 32 protrude partially above carrying surface 36 through openings 34 therein. Carrier plate 67 is optionally additionally provided between load 62 and contact surfaces 66 of roller elements 32. If desired, it is also possible to provide ground surface 64 with optional conveyor belt system 68 for automatic loading of loading system 2. Due to movement of belt system 68 load 62 is in the second pick-up or set-down mode displaced over loading system 2 while remaining in the same spatial position.

For the purpose of displacing load 62 loading system 2 is composed of a number of loading modules which are provided on the front side of loading system 2 with front loading modules 6. Modules 4, 6 are mutually connected in longitudinal direction via couplings 40 and, in the case of a plurality of tracks 12, 14, held at a desired position in width direction B using spacers 16.

During use, loading system 2 is inserted with nose element 38 under load 62. By placing loading system 2 in the second pick-up or set-down mode by lowering or descending of lifting element 56 carrying surface 36 is moved preferably maximally downward relative to roller elements 28, 32. Contact surfaces 66 of roller elements 32 hereby come into contact with load 62, optionally via carrier plate 67, and load 62 will not move, or hardly so, relative to ground surface 64, while loading system 2 is inserted under this load 62. After load 62 has been positioned on loading system 2, lifting element 56 is activated. In the shown embodiment activation is possible by connecting hose 56 to compressed air coupling 70 (indicated schematically in figure 1A). By inflating hose 56 carrying surface 36 moves upward relative to roller elements 28, 32. Carrying surface 36 hereby comes to lie above contact surface 66 of roller elements 32 so that these roller elements 32 are no longer in contact with load 62. In this transport mode load 62 is carried wholly by carrying surface 36. By displacing loading system 2 load 62 will also move along in this transport mode and will therefore move relative to ground surface 64. When the desired set-down location for load 62 is reached, lifting element 56 is deactivated, wherein in the shown embodiment air is pushed from hose 56, for instance by making use of the weight of load 62. Load 62 hereby comes to lie on contact surfaces 66 of roller elements 32. When loading system 2 is withdrawn, load 62 will hereby remain substantially at the same position relative to ground surface 64. Load 62 can hereby be set down at the desired location and loading system 2 can then be used to transport other goods. It is noted that it is possible to co-transport loading system 2 with load 62 in order to further simplify the logistical transport.

The present invention is by no means limited to the above described preferred embodiments thereof. The rights sought are defined by the following claims, within the scope of which many modifications can be envisaged.

## Claims

1. Loading module (4) for transport of goods, the loading module (4) comprising:
- a frame provided with:
- a carrying surface (36) provided with a number of openings (34);
- a first row (26) of roller elements (28) provided with a rotation shaft (58); and
- a second row (30) of roller elements (32), provided with a rotation shaft (58), which lies above the first row (26) of roller elements (28), and wherein the rotation shafts (58) of the second row (30) lie substantially at a greater distance from a ground surface (64) as compared to the rotation shafts (58) of the first row (26), and wherein in a first transport mode the second row (30) of roller elements (32) lie substantially under the carrying surface (36) and in a second pick-up or set-down mode protrude at least partially with a contact surface through the openings (34) in the carrying surface (36); and
- a pneumatic and/or hydraulic lifting element (56) arranged in the frame and configured to switch the loading module (4) between a first transport mode and a second pick-up or set-down mode, wherein the lifting element (56) comprises a hose-like element (56),
**characterized in that**,
the carrying surface (36) is configured to move upwards and/or downwards in accordance with the lifting element (56).

2. Loading module (4) according to claim 1, wherein the hose-like element (56) extends in longitudinal direction of the loading module (4).

3. Loading module (4) according to claim 1 or 2, wherein the lifting element (56) comprises a pneumatic lifting element.

4. Loading module (4) according to claim 3, further comprising a pneumatic coupling (70) configured to couple the pneumatic lifting element to a compressed air source.

5. Loading system (2), comprising one or more loading modules (4) according to any one of the foregoing claims, and one or more front modules (6).

6. Loading system (2) according to claim 5, further comprising a number of spacers (16) for connecting loading modules (4) which are positioned adjacently of each other as seen in the usual direction of travel.

7. Loading system (2) according to claim 6, wherein the spacers (16) are adjustable in longitudinal direction.

8. Loading system (2) according to any one of the foregoing claims 5-7, further comprising a support bar configured to hold the load (62)in position when it is being set down.

9. Loading system (2) according to any one of the foregoing claims 5-8, further comprising a carrier plate (67) configured to be arranged between the load (62) and the carrying surface (36).

10. Loading system (2) according to any one of the foregoing claims 5-9, further comprising an automatic loading system.

11. Method for transport of goods, the method comprising the steps of:
- providing a loading module (4) and/or loading system (2) according to any one of the foregoing claims;
- picking up the goods;
- displacing the goods; and
- setting down the goods.

## Patentansprüche

1. Lademodul (4) für einen Transport von Gütern, das Lademodul (4) umfassend:
- einen Rahmen, der bereitgestellt wird mit:
- einer tragenden Oberfläche (36), die mit einer Anzahl von Öffnungen (34) bereitgestellt wird;
- einer ersten Reihe (26) von Rollenelementen (28), die mit einer Rotationswelle (58) bereitgestellt werden; und
- einer zweiten Reihe (30) von Rollenelementen (32), die mit einer Rotationswelle (58) bereitgestellt werden, die oberhalb der ersten Reihe (26) von Rollenelementen (28) liegt, und wobei die Rotationswellen (58) der zweiten Reihe (30) im Vergleich zu den Rotationswellen (58) der ersten Reihe (26) im Wesentlichen in einem größeren Abstand von einer Bodenoberfläche (64) liegen, und wobei in einem ersten Transportmodus die zweite Reihe (30) der Rollenelemente (32) im Wesentlichen unter der tragenden Oberfläche (36) liegt und in einem zweiten Aufnahme- oder Absetzmodus mindestens teilweise mit einer Kontaktfläche durch die Öffnungen (34) in der tragenden Oberfläche (36) herausragt; und
- einem pneumatischen und/oder hydraulischen Hubelement (56), das in dem Rahmen angeordnet und so konfiguriert ist, dass das Lademodul (4) zwischen einem ersten Transportmodus und einem zweiten Aufnahme- oder Absetzmodus umschaltet, wobei das Hubelement (56) ein schlauchartiges Element (56) umfasst,
**dadurch gekennzeichnet, dass**
die tragende Oberfläche (36) so konfiguriert ist, dass sie sich gemäß dem Hubelement (56) aufwärts und/oder abwärts bewegt.

2. Lademodul (4) nach Anspruch 1, wobei sich das schlauchartige Element (56) in Längsrichtung des Lademoduls (4) erstreckt.

3. Lademodul (4) nach Anspruch 1 oder 2, wobei das Hubelement (56) ein pneumatisches Hubelement umfasst.

4. Lademodul (4) nach Anspruch 3, ferner umfassend eine pneumatische Kupplung (70), die so konfiguriert ist, dass sie das pneumatische Hubelement mit einer Druckluftquelle koppelt.

5. Ladesystem (2), umfassend ein oder mehrere Lademodule (4) nach einem der vorangehenden Ansprüche und ein oder mehrere Frontmodule (6).

6. Ladesystem (2) nach Anspruch 5, ferner umfassend eine Anzahl von Abstandshaltern (16) zum Verbinden von Lademodulen (4), die in der üblichen Fahrtrichtung gesehen nebeneinander positioniert sind.

7. Ladesystem (2) nach Anspruch 6, wobei die Abstandshalter (16) in Längsrichtung verstellbar sind.

8. Ladesystem (2) nach einem der vorstehenden Ansprüche 5 bis 7, ferner umfassend einen Stützbalken, der so konfiguriert ist, dass er die Last (62) in Position hält, wenn sie abgesetzt wird.

9. Ladesystem (2) nach einem der vorstehenden Ansprüche 5 bis 8, ferner umfassend eine Trägerplatte (67), die so konfiguriert ist, dass sie zwischen der Last (62) und der tragenden Oberfläche (36) angeordnet werden kann.

10. Ladesystem (2) nach einem der vorstehenden Ansprüche 5 bis 9, ferner umfassend ein automatisches Ladesystem.

11. Verfahren für einen Transport von Gütern, das Verfahren umfassend die folgenden Schritte:
- Bereitstellen eines Lademoduls (4) und/oder eines Ladesystems (2) nach einem der vorstehenden Ansprüche;
- Aufnehmen der Waren;
- Verschieben der Waren; und
- Absetzen der Waren.

## Revendications

1. Module de chargement (4) pour le transport de marchandises, le module de chargement (4) comprenant :
- un cadre pourvu de :
- une surface porteuse (36) pourvue d'un certain nombre d'ouvertures (34) ;
- une première rangée (26) d'éléments de rouleau (28) pourvus d'un arbre de rotation (58) ; et
- une seconde rangée (30) d'éléments de rouleau (32), pourvue d'un arbre de rotation (58), qui se trouve au-dessus de la première rangée (26) d'éléments de rouleau (28), et les arbres de rotation (58) de la seconde rangée (30) se trouvant sensiblement à une plus grande distance d'une surface de sol (64) en comparaison avec les arbres de rotation (58) de la première rangée (26), et dans un premier mode de transport, la seconde rangée (30) d'éléments de rouleau (32) se trouvant sensiblement sous la surface porteuse (36) et dans un second mode de soulèvement ou de dépose faisant saillie au moins partiellement avec une surface de contact à travers les ouvertures (34) dans la surface porteuse (36) ; et
- un élément de levage pneumatique et/ou hydraulique (56) disposé dans le cadre et conçu pour commuter le module de chargement (4) entre un premier mode de transport et un second mode de soulèvement ou de dépose, l'élément de levage (56) comprenant un élément en forme de tuyau (56),
**caractérisé en ce que,**
la surface porteuse (36) est conçue pour se déplacer vers le haut et/ou vers le bas conformément à l'élément de levage (56).

2. Module de chargement (4) selon la revendication 1, dans lequel l'élément en forme de tuyau (56) s'étend dans la direction longitudinale du module de chargement (4).

3. Module de chargement (4) selon la revendication 1 ou 2, dans lequel l'élément de levage (56) comprend un élément de levage pneumatique.

4. Module de chargement (4) selon la revendication 3, comprenant en outre un accouplement pneumatique (70) conçu pour accoupler l'élément de levage pneumatique à une source d'air comprimé.

5. Système de chargement (2), comprenant un ou plusieurs modules de chargement (4) selon l'une quelconque des revendications précédentes, et un ou plusieurs modules avant (6).

6. Système de chargement (2) selon la revendication 5, comprenant en outre un certain nombre d'entretoises (16) pour raccorder des modules de chargement (4) qui sont positionnés de manière adjacente les uns aux autres comme vus dans la direction de déplacement habituelle.

7. Système de chargement (2) selon la revendication 6, dans lequel les entretoises (16) sont ajustables en direction longitudinale.

8. Système de chargement (2) selon l'une quelconque des revendications précédentes 5 à 7, comprenant en outre une barre de support conçue pour maintenir la charge (62) en position lors de sa dépose.

9. Système de chargement (2) selon l'une quelconque des revendications précédentes 5 à 8, comprenant en outre une plaque porteuse (67) conçue pour être disposée entre la charge (62) et la surface porteuse (36).

10. Système de chargement (2) selon l'une quelconque des revendications précédentes 5 à 9, comprenant en outre un système de chargement automatique.

11. Procédé de transport de marchandises, le procédé comprenant les étapes consistant à :
- fournir un module de chargement (4) et/ou un système de chargement (2) selon l'une quelconque des revendications précédentes ;
- soulever les marchandises ;
- déplacer les marchandises ; et
- déposer les marchandises.
